# FASCICULE DE BREVET EUROPEEN

(11) **EP 0 833 434 B1**
(45) Date de publication et mention de la délivrance du brevet: **22.10.2003**
(21) Numéro de dépôt: 97402220.4
(22) Date de dépôt: 24.09.1997
(51) Int. Cl.: H02P 6/20

(54) **Procédé et dispositif de synchronisation pour le démarrage d'un moteur synchrone triphasé**
Synchronisationsverfahren- und Vorrichtung für den Anlauf einer dreiphasigen Synchronmaschine
Synchronising method and device for starting a synchronous motor

(30) Priorité: 27.09.1996 FR 9611794
(43) Date de publication de la demande: 01.04.1998
(73) Titulaire: VALEO ELECTRONIQUE, 94000 Creteil (FR)
(72) Inventeur: Permuy, Alfred, 92500 Rueil-Malmaison (FR)
(74) Mandataire: Le Forestier, Eric

(56) Documents cités:
- EP-A- 0 713 286
- WO-A-95/24071
- DE-A- 3 325 610
- DE-A- 4 305 321
- FR-A- 2 590 423
- US-A- 5 432 414

## Description

La présente invention est relative aux procédés et aux dispositifs pour la synchronisation de l'alimentation d'un moteur synchrone triphasé.

Elle trouve en particulier avantageusement application pour les moteurs triphasés de groupes motoventilateurs de véhicule automobile.

Classiquement, pour synchroniser l'alimentation des différentes phases d'un moteur triphasé avec la rotation du rotor de celui-ci, on considère qu'il est nécessaire de disposer d'autant de capteurs que de phases à synchroniser.

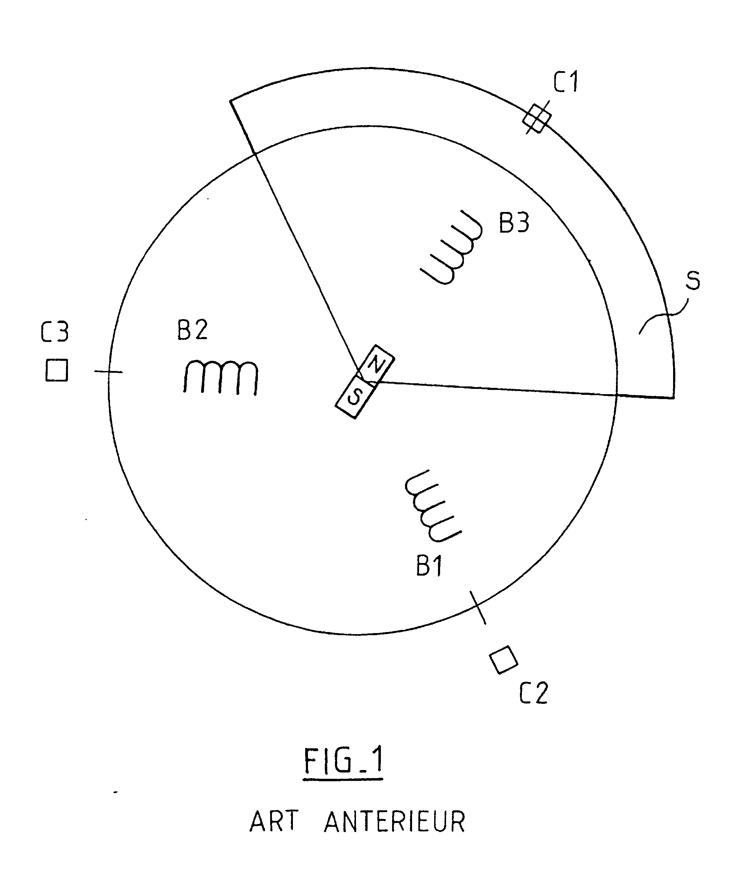

On a par exemple illustré sur la figure 1 le cas le plus simple d'un moteur synchrone triphasé dont le rotor ne comporte qu'une paire de pôles.

Dans ce cas, l'angle électrique est égal à l'angle mécanique, c'est-à-dire qu'une période de signaux de commande correspond à un tour du rotor.

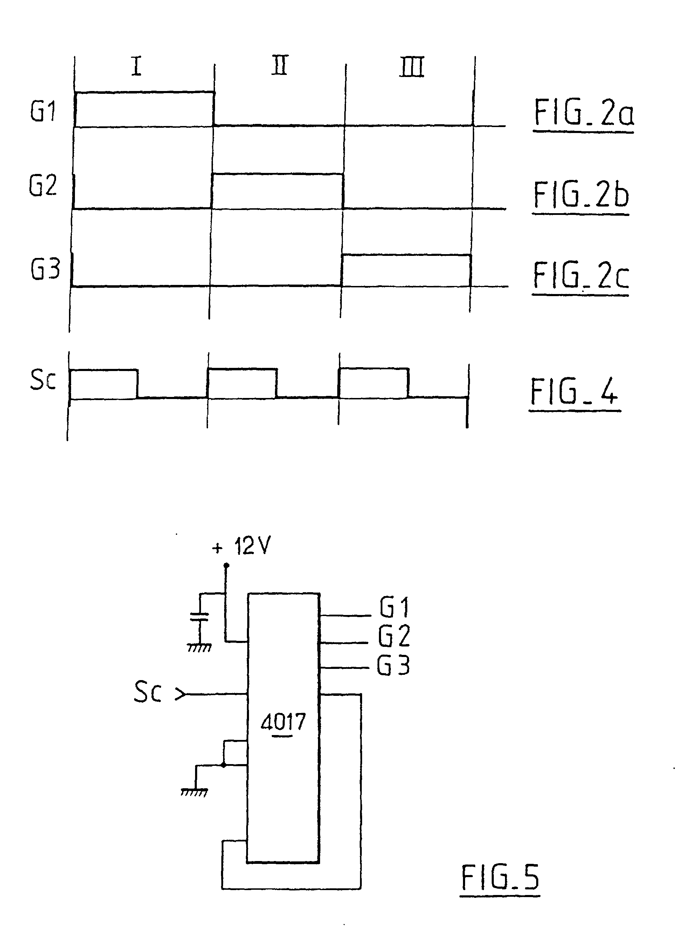

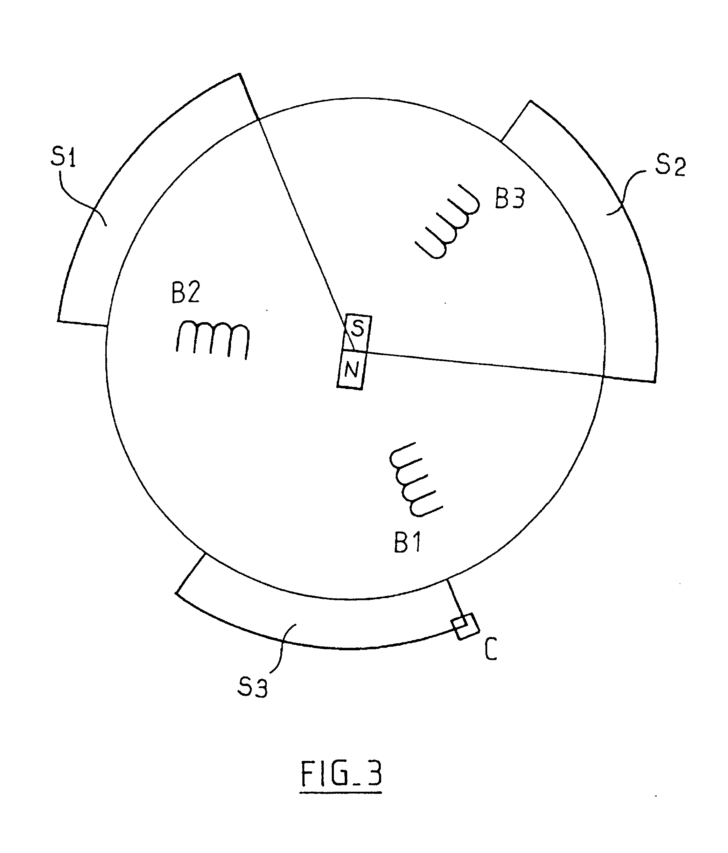

Les bobinages B1, B2 et B3 du stator de ce moteur sont par exemple alimentés par trois signaux G1, G2 et G3 tels représentés sur les figures 2a à 2c.

Habituellement, pour la génération de ces trois signaux G1 à G3, on dispose de trois capteurs C1 à C3 qui permettent de suivre la rotation du rotor et de détecter l'instant où une transition doit intervenir sur respectivement lesdits signaux G1 à G3.

Ces capteurs C1 à C3 sont par exemple des cellules à effet Hall réparties autour du stator en étant décalées de 120° les uns par rapport aux autres, ainsi qu'illustré sur la figure 1.

Le rotor comporte alors un secteur magnétique S de 120° d'ouverture qui coopère avec ces trois capteurs C1 à C3.

Par convention, on décide que les sens des bobinages sont tels que lorsqu'un bobinage est parcouru par un courant, il tend à faire s'aligner le pôle nord du rotor suivant son axe.

Le signal donné par chaque capteur Ci est le signal Gi qu'il faut appliquer à la bobine Bi. A la mise en route, il suffit d'alimenter la bobine Gi dont le capteur Ci associé est à l'état haut et le moteur démarre.

On connaît par FR 2 590 423 ou DE-A-4 305 321 un procédé et un dispositif qui permettent d'être assurés du sens de rotation suivant lequel le moteur électrique démarre.

Selon ce procédé et ce dispositif, on prévoit une étape de calage qui permet d'être sûr du bon positionnement du rotor avant de lancer les séquences d'alimentation des bobinages.

Dans la structure décrite dans FR 2 590 423, la position angulaire du rotor est fournie par des moyens de détection qui comportent soit plusieurs capteurs à effet hall, soit des moyens pour la mesure de tension relative aux différents bobinages. La structure décrite dans DE-A-4 305 321 n'utilise qu'un seul signal caractérisant la position du rotor.

Toutefois, on souhaite pouvoir supprimer ou alléger cette phase de calage.

Egalement, on souhaite pouvoir n'utiliser qu'un seul capteur pour la synchronisation de plusieurs phases.

La solution selon l'invention consiste en un procédé de synchronisation de l'alimentation d'un moteur électrique triphasé synchrone, notamment pour véhicule automobile, consistant en ce qu'on synchronise les signaux d'alimentation des différentes phases dudit moteur sur un même signal qui caractérise la position du rotor dudit moteur, caractérisé en ce que pour démarrer ledit moteur on lance celui ci directement sans phase de calage en alimentant les trois phases du moteur par trois signaux d'alimentation déphasés deux à deux de 2π/3 et en ce que si le moteur reste bloqué, on change l'alimentation des différentes phases du moteur pour alimenter celles-ci avec les mêmes signaux, déphasés de 2π/3.

Une telle commande permet la synchronisation de l'alimentation d'un moteur sur un seul signal.

L'invention propose également un dispositif permettant la mise en oeuvre de ce procédé.

Elle propose en outre la combinaison d'un tel dispositif de synchronisation et d'un moteur électrique, ainsi qu'un groupe moto-ventilateur de véhicule automobile comportant une telle combinaison.

D'autres caractéristiques et avantages de l'invention ressortiront encore de la description qui suit, qui doit être lue en regard des figures annexées, sur lesquelles :
- la figure 1, déjà analysée, est une représentation schématique d'un moteur synchrone triphasé conforme à un mode de réalisation de l'art antérieur ;
- les figures 2a à 2c représentent schématiquement trois signaux pour l'alimentation des trois bobines du moteur de la figure 1 ;
- la figure 3 représente schématiquement un moteur synchrone conforme à un mode de réalisation possible de l'invention ;
- la figure 4 représente schématiquement le signal en sortie du capteur du moteur de la figure 3 ;
- la figure 5 est une représentation schématique d'un dispositif pour la génération des signaux des figures 2a à 2c à partir du signal de la figure 4.

Le moteur synchrone triphasé illustré sur la figure 3 est un moteur à une paire de pôles comportant trois bobinages B1, B2 et B3 dont les signaux d'alimentation sont générés au moyen d'un seul capteur C.

Ce capteur C est par exemple un capteur à effet Hall qui coopère avec une roue solidaire du rotor, laquelle comporte trois secteurs magnétiques S1, S2 et S3 de 60° d'ouverture répartis équitablement sur la circonférence totale du rotor.

Le signal Sc fourni par le capteur C est celui qui est illustré sur la figure 4.

L'alimentation des bobines par les signaux G1 à G3 doit se faire - modulo 3 - dans l'ordre Bᵢ₀, Bᵢ₀₊₁, Bᵢ₀₊₂, Bᵢ₀. Toutefois, le problème qui se pose vient de ce que l'on ne sait pas quelle est la bobine Bᵢ₀ qui doit être alimentée en premier, étant donné que l'on ne connaît pas a priori la position initiale du rotor.

Selon l'invention, on alimente au démarrage une quelconque des bobines, par exemple B1.

Selon la position initiale du rotor, il y a trois cas différents :
- soit il fallait effectivement commencer par B1 et alors le moteur démarre (commande en phase avec la position initiale du rotor) ;
- soit il fallait commencer par B2 et alors le rotor ne bouge pas (commande en retard par rapport à la position effective du rotor), car éventuellement le pôle nord du rotor vient s'aligner sur l'axe de B1 mais il n'y a aucune transition du signal Sc ;
- soit il fallait commencer par B3 et alors le rotor revient en arrière pour que le pôle nord s'aligne sur l'axe de B1, ce qui produit une transition du signal Sc et déclenche le pas suivant c'est-à-dire l'alimentation de B2 (commande en avance par rapport à la position effective du rotor) ; et le rotor démarre alors quand même.

Un montage permettant la génération des signaux d'alimentation Gi à partir du signal Sc donné par le capteur C a été illustré sur la figure 5.

Un tel montage comporte un circuit intégré de type CD 4017 BE qui reçoit le signal Sc en entrée.

Un tel circuit fonctionne comme diviseur par trois de fréquence.

A chaque front montant du signal Sc, ses sorties (qui fournissent respectivement les signaux G1 à G3) passent successivement à 1.

La quatrième sortie est reliée à une entrée de remise à zéro dudit circuit, ce qui fait repartir le 1 logique sur la première sortie (signal G1).

Bien entendu, l'invention vient d'être décrite dans le cas simple d'un moteur à une paire de pôles, mais peut être généralisée à tout moteur à 2(resp. n) paires de pôles. A cet effet, on utilise par exemple une roue présentant 2(resp. n) fois plus de secteurs d'ouverture 30° (resp. 60°/n) pour générer 2(resp. n) fois plus de transition du signal Sc. Avec 2(n) paires de pôles au lieu d'une paire, les phases I, II et III des signaux des figures 3a à 3c ne correspondent plus qu'à 1/2 (1/nème de) tour complet du rotor (l'angle électrique est différent de l'angle mécanique).

Le procédé de synchronisation est par ailleurs inchangé.

Dans le cas général, on constate en effet que lorsque l'on alimente un moteur triphasé avec trois signaux d'alimentation déphasés de 2π/3, le moteur démarre dans deux cas sur trois et reste bloqué dans le troisième cas.

S'il reste bloqué, il suffit de décaler de 2π/3 l'alimentation des différentes phases. Le moteur démarre alors nécessairement.

Egalement, les signaux d'alimentation peuvent être, de façon à assouplir la commande du moteur et à avoir un couple plus régulier, des signaux se recouvrant, les signaux G1, G2 et G3 que l'on a représentés sur les figures 2a à 2c avec lesquels la description qui précède a été faite ayant été ici retenus pour permettre une meilleure compréhension de l'invention.

Par ailleurs, d'autres types de capteurs que des capteurs à effet hall peuvent être utilisés, par exemple des roues codeuses, ou encore des moyens qui comportent des moyens de génération d'un faisceau lumineux (diode électroluminescente ou lampe) et une cellule photoélectrique.

L'invention trouve en particulier avantageusement application dans le cas de moteurs électronisés, par exemple de groupes motoventilateurs de véhicules automobiles.

Le dispositif de synchronisation de l'alimentation d'un moteur triphasé proposé par l'invention comporte des moyens pour synchroniser les signaux d'alimentation des différentes phases dudit moteur sur un même signal en sortie d'un capteur pour la caractérisation de la rotation du rotor et des moyens pour, au démarrage du moteur, alimenter les trois phases du moteur par trois signaux d'alimentation déphasés deux à deux de 2π/3 et pour, si le moteur reste bloqué, changer l'alimentation des différentes phases dudit moteur pour alimenter celles-ci avec les mêmes signaux, déphasés de 2π/3.

Les signaux d'alimentation sont des signaux en créneau, le signal sur lequel lesdits signaux sont synchronisés étant un signal en créneau dont les différentes transitions déclenchent les transitions desdits signaux d'alimentation.

## Revendications

1. Procédé de synchronisation de l'alimentation d'un moteur électrique synchrone triphasé, notamment pour véhicule automobile, consistant en ce qu'on synchronise les signaux d'alimentation des différentes phases dudit moteur sur un même signal qui caractérise la position du rotor dudit moteur, **caractérisé en ce que** pour démarrer ledit moteur on lance celui-ci directement sans phase de calage préalable en alimentant les trois phases par trois signaux d'alimentation déphasés deux à deux de 2π/3 et **en ce que** si le moteur reste bloqué, on change l'alimentation des différentes phases du moteur pour alimenter celles-ci avec les mêmes signaux déphasés de 2π/3.

2. Procédé selon la revendication 1, **caractérisé en ce que** les signaux d'alimentation sont des signaux en créneau, le signal sur lesquels lesdits signaux sont synchronisés étant un signal en créneau dont les différentes transitions déclenchent les transitions desdits signaux d'alimentation.

3. Procédé selon l'une des revendications précédentes, **caractérisé en ce que** le moteur électrique est un moteur électrique de groupe moto-ventilateur de véhicule automobile.

4. Dispositif de synchronisation de l'alimentation d'un moteur triphasé, comportant des moyens pour synchroniser les signaux d'alimentation des différentes phases dudit moteur sur un même signal en sortie d'un capteur pour la caractérisation de la rotation du rotor, **caractérisé en ce qu'**il comprend des moyens pour, au démarrage du moteur, alimenter les trois phases du moteur par trois signaux d'alimentation déphasés deux à deux de 2π/3 et pour, si le moteur reste bloqué, changer l'alimentation des différentes phases dudit moteur pour alimenter celles-ci avec les mêmes signaux, déphasés de 2π/3.

5. Dispositif selon la revendication 4, **caractérisé en ce qu'**il comporte un seul capteur pour la caractérisation de la rotation du rotor.

6. Combinaison d'un moteur électrique triphasé et d'un dispositif de synchronisation selon l'une des revendications 4 et 5.

7. Groupe moto-ventilateur de véhicule automobile, **caractérisé en ce qu'**il comporte une combinaison d'un moteur électrique triphasé et d'un dispositif de synchronisation selon l'une des revendications 4 et 5.

## Patentansprüche

1. Verfahren zur Synchronisation der Speisung eines elektrischen Drehstromsynchronmotors, insbesondere für Kraftfahrzeuge, das darin besteht, daß die Speisesignale der verschiedenen Phasen des besagten Motors auf ein und demselben Signal synchronisiert werden, das die Position des Läufers des besagten Motors **kennzeichnet, dadurch gekennzeichnet**, **daß**, um den besagten Motor anlaufen zu lassen, dieser direkt ohne vorherige Einstellphase gestartet wird, indem die drei Phasen durch drei paarweise um 2π/3 phasenverschobene Speisesignale gespeist werden, und daß, wenn der Motor blockiert bleibt, die Speisung der verschiedenen Phasen des Motors geändert wird, um diese mit den gleichen, um 2π/3 phasenverschobenen Signalen zu speisen.

2. Verfahren nach Anspruch 1, **dadurch gekennzeichnet, daß** die Speisesignale Rechtecksignale sind, wobei das Signal auf dem die besagten Signale synchronisiert werden, ein Rechtecksignal ist, dessen verschiedene Übergänge die Übergänge der besagten Speisesignale auslösen.

3. Verfahren nach einem der vorangehenden Ansprüche, **dadurch gekennzeichnet, daß** der Elektromotor ein Elektromotor des Lüfteraggregats eines Kraftfahrzeugs ist.

4. Vorrichtung zur Synchronisation der Speisung eines Drehstrommotors, die Mittel zum Synchronisieren der Speisesignale der verschiedenen Phasen des besagten Motors auf ein und demselben Signal am Ausgang eines Gebers zur Kennzeichnung der Drehung des Läufers umfaßt, **dadurch gekennzeichnet, daß** sie Mittel umfaßt, um beim Anlaufen des Motors die drei Phasen des Motors durch drei, paarweise um 2π/3 phasenverschobene Speisesignale zu speisen und, wenn der Motor blockiert bleibt, die Speisung der verschiedenen Phasen des Motors zu verändern, um diese mit den gleichen, um 2π/3 phasenverschobenen Signalen zu speisen.

5. Vorrichtung nach Anspruch 4, **dadurch gekennzeichnet, daß** sie einen einzigen Geber zur Bestimmung der Drehung des Läufers umfaßt.

6. Kombination eines elektrischen Drehstrommotors und einer Synchronisationsvorrichtung nach einem der Ansprüche 4 und 5.

7. Lüfteraggregat eines Kraftfahrzeugs, **dadurch gekennzeichnet, daß** es eine Kombination eines elektrischen Drehstrommotors und einer Synchronisationsvorrichtung nach einem der Ansprüche 4 und 5 umfaßt.

## Claims

1. A method of synchronising the power supply for a three-phase synchronous electric motor, especially for a motor vehicle, consisting in synchronising the power supply signals of the various phases of the said motor on a common signal that characterises the position of the rotor of the said motor, **characterised in that**, in order to start the said motor, the latter is fired directly without any preliminary positioning phase, by supplying the three phases with three power signals out of phase by 2π/3 two by two, and **in that**, if the motor remains stationary, the supply of power to the various phases of the motor is changed in order to supply the latter with the same signals phase-shifted by 2π/3.

2. A method according to Claim 1, **characterised in that** the power supply signals are pulsed signals, the signal on which the said signals are synchronised being a pulse signal of which the various transitions initiate the transitions in the said power supply signals.

3. A method according to one of the preceding Claims, **characterised in that** the electric motor is an electric motor of a motorised fan unit for a motor vehicle.

4. Apparatus for synchronising the power supply of a three-phase motor, including means for synchronising the power supply signal of the various phases of the said motor on a common signal which is an output signal from a sensor for **characterising** the rotation of the rotor, **characterised in that** it comprises means whereby, on starting of the motor, the three phases of the motor are supplied with three power supply signals which are out of phase by 2π/3 two by two, and means whereby, if the motor remains stationary, the power supply of the different phases of the said motor is changed so as to supply the latter with the same signals phase-shifted by 2π/3.

5. Apparatus according to Claim 4, **characterised in that** it includes a single sensor for **characterising** the rotation of the rotor.

6. A combination of a three-phase electric motor and a synchronising apparatus according to Claim 4 or Claim 5.

7. A motorised fan unit for a motor vehicle, **characterised in that** it includes a combination of a three-phase electric motor and a synchronising apparatus according to Claim 4 or Claim 5.
